# FASCICULE DE BREVET EUROPEEN

(11) **EP 4 411 652 B1**
(45) Date de publication et mention de la délivrance du brevet: **16.09.2026**
(21) Numéro de dépôt: 24154815.5
(22) Date de dépôt: 30.01.2024
(51) Int. Cl.: G06T 15/04, G06T 15/40

(54) **PROCÉDÉ DE CALCUL DE VISIBILITÉ D'OBJETS AU SEIN D'UNE SCÈNE 3D**
VERFAHREN ZUR BERECHNUNG DER SICHTBARKEIT VON OBJEKTEN IN EINER 3D-SZENE
METHOD FOR CALCULATING THE VISIBILITY OF OBJECTS WITHIN A 3D SCENE

(30) Priorité: 06.02.2023 FR 2301116
(43) Date de publication de la demande: 07.08.2024
(73) Titulaire: Gadsme, 75009 Paris (FR)
(72) Inventeur: FAIVRE, Jéremy, 75013 PARIS (FR); VAUVILLIER, Luc, 92170 VANVES (FR); MONTEUX, Guillaume, 75009 PARIS (FR)
(74) Mandataire: Cabinet Camus Lebkiri

(56) Documents cités:
- FR-A1- 3 112 638
- WOLSKI K ET AL: "Selecting texture resolution using a task-specific visibility metric", COMPUTER GRAPHICS FORUM : JOURNAL OF THE EUROPEAN ASSOCIATION FOR COMPUTER GRAPHICS, WILEY-BLACKWELL, OXFORD, vol. 38, no. 7, 14 November 2019 (2019-11-14), pages 685 - 696, XP071489866, ISSN: 0167-7055, DOI: 10.1111/CGF.13871

## Description

### DOMAINE TECHNIQUE DE L'INVENTION

Le domaine technique de l'invention est celui du rendu tridimensionnel ou rendu 3D, ou 2D pour deux dimensions, et de la détection de visibilité d'objets dans des applications utilisant des moteurs de rendu graphique comme les jeux vidéo, les mondes virtuels, la réalité virtuelle, la réalité augmentée, etc.

La présente invention concerne un procédé de calcul de visibilité d'objets au sein d'une scène en trois dimensions aussi appelée scène 3D.

### ARRIERE-PLAN TECHNOLOGIQUE DE L'INVENTION

Dans le domaine de la technique, des moteurs de rendu graphiques tels que Unity, Unreal et d'autres, sont couramment utilisés pour générer et afficher un flux vidéo donnant une représentation virtuelle et en temps réel d'une scène composée d'objets 3D.

Les images qui composent ce flux vidéo sont des images à deux dimensions (ou images matricielles) appelées aussi « rendus ».

Chaque rendu est généré et affiché (on dit aussi « dessiné ») sur un plan de rendu appelé « viewport » et selon un angle de vue prédéfini appelé « caméra ». Pour cela, on utilise des algorithmes combinés au sein d'un pipeline graphique, ou « render pipeline » en anglais, utilisé par le moteur de rendu graphique et intégré sur une carte graphique.

Le pipeline graphique utilise comme données d'entrée la représentation dans un espace de coordonnées (x,y,z) des objets 3D qui composent la scène à représenter.

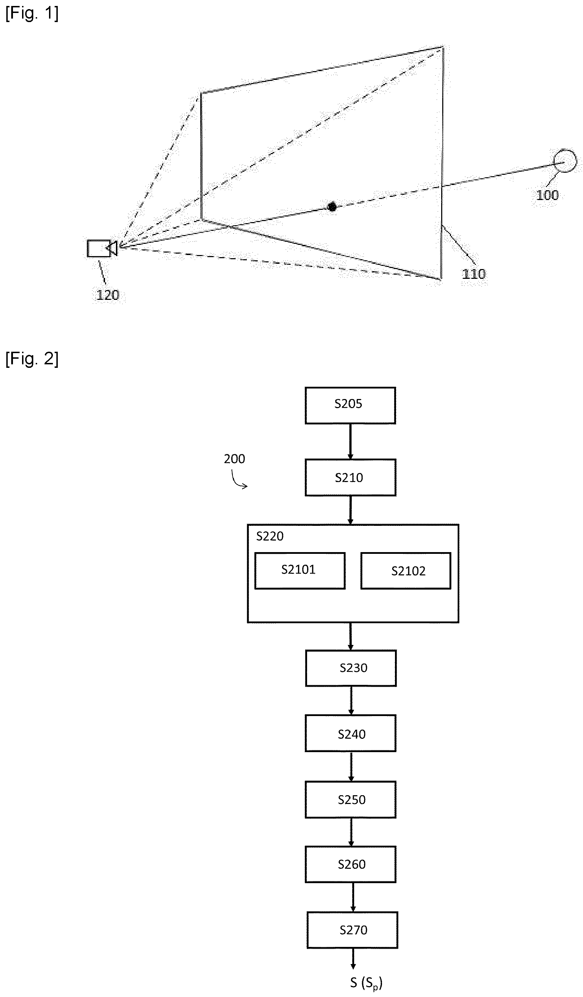

A partir de ces données d'entrée, et en référence à la figure 1, chaque objet 100 est projeté sur un viewport 110 depuis le point de vue d'une caméra 120, elle aussi définie dans l'espace de coordonnées (x,y,z).

Chaque rendu restitue à la fois la projection 3D, les textures (apparence des surfaces), et les effets d'éclairage (ombres, réflexion, etc.) de l'objet 100.

Les objets, tels que vus par l'utilisateur final (ou spectateur) sont par exemple des objets du quotidien, des bâtiments, des véhicules dont la texture, et l'éclairage sont réalistes, c'est-à-dire dont l'apparence est proche d'une apparence réelle.

La caméra 120 détermine l'angle de vue depuis lequel la scène est dessinée. La position de cette caméra 120 peut changer au cours du flux vidéo. Ainsi, le point de vue utilisé pour dessiner la scène peut changer d'une image à l'autre. Il en résulte que certains objets peuvent être visibles sur certaines images, ou partiellement visibles, ou encore complètement invisibles sur d'autres images.

Par exemple, un objet peut être vu (et ainsi être visible) par la caméra 120 lorsqu'aucun autre objet n'est intercalé entre l'objet 100 et la caméra 120 et lorsque l'objet est suffisamment éclairé. Il peut être partiellement visible lorsqu'un objet semi-transparent est intercalé entre lui et la caméra, ou lorsqu'il est situé en partie dans une zone d'ombre. Enfin, il peut être invisible lorsqu'il est caché derrière un autre objet, ou situé dans une zone non éclairée.

La visibilité ou non d'un objet de la scène n'est donc pas fixe au cours du flux vidéo. Il n'est pas non plus aisé de la déterminer a priori car les mouvements de la caméra 120 ne sont généralement pas prédictibles. Or, il existe un besoin, pour certaines applications, de contrôler et suivre en temps réel cette visibilité. La connaissance de cette visibilité permet, par exemple, une gestion fine de la mémoire. En effet si un objet n'est pas ou plus visible on peut ne pas charger dans, ou décharger de, la mémoire la texture associée à cet objet. Dans la mesure où les textures sont les éléments qui prennent le plus de place en mémoire, on comprend l'intérêt technique d'un tel procédé de calcul de visibilité.

Plusieurs solutions existent pour cela qui consistent à représenter la visibilité d'un objet par un score dit de visibilité associé à l'objet.

Une première solution consiste à utiliser la technique dite du zbuffer. Cette technique permet de déterminer la visibilité d'un objet au moment où celui-ci est dessiné. Au cours de la génération du rendu final, d'autres objets peuvent donc être dessinés par-dessus , qui peuvent masquer l'objet dont on a déterminé la visibilité, rendant le calcul de visibilité erroné.

Une deuxième solution consiste à utiliser la technique dite de lancer de rayons ou « raycast » en anglais. Cette technique utilise un « collider » ou détecteur de collision habituellement utilisé par le moteur physique pour détecter des collisions entre objets. L'objet dont on veut calculer la visibilité doit donc nécessairement être associé à un tel « collider ». A cette contrainte s'ajoute le fait que la technique ne peut être appliquée lorsque l'objet se situe derrière un autre objet, même semi-transparent, ou dans une zone d'ombre.

Une troisième solution est décrite dans le brevet FR3112638B1. Elle consiste à utiliser un stencil buffer dans un deuxième rendu destiné uniquement au calcul de visibilité, et donc non affiché, et généré en parallèle du rendu principal (celui qui rend la scène depuis une caméra principale et est affiché à l'utilisateur), par une deuxième caméra qui suit à tout instant la position et les caractéristiques de la caméra principale. Précisément, le stencil buffer est utilisé dans le pipeline servant à générer le deuxième rendu, après une étape de dessin des objets opaques de la scène. Le pipeline graphique est nécessairement de type « forward », c'est à-dire qu'il permet de dessiner, dans cet ordre, les objets opaques et les objets transparents de la scène.

Cette technique est très précise, c'est-à-dire qu'elle permet de prendre en compte l'éclairage et les ombres de la scène. Elle permet par exemple de calculer la visibilité d'un objet même si celui-ci est partiellement masqué par un autre objet ou situé dans une zone d'ombre. Cependant, elle nécessite d'accéder à un stencil buffer, et donc à des ressources de calcul adaptées, et n'est pas compatible avec des pipelines graphiques autres que de type « forward ». Par exemple, elle ne peut être implémentée dans un pipeline de type « deferred » utilisant une stratégie différente de rendu, dans laquelle l'ordre de dessin est différent.

Il existe donc un besoin d'un procédé de calcul de scores de visibilité d'objets adapté à toutes les architectures de pipeline graphique, que ces architectures soient logicielles ou matérielles. Une telle solution doit également pouvoir s'adapter aux ressources, de calcul et énergétique, disponibles.

### RESUME DE L'INVENTION

L'invention est définie par la revendication indépendante ci-jointe et offre une solution aux problèmes évoqués précédemment, en permettant de calculer le score de visibilité non pas à partir d'un deuxième rendu intermédiaire correspondant au rendu des objets opaques, mais à partir d'un deuxième rendu final.

Pour cela, on utilise une technique de comparaison de couleur se déployant avant et après la génération du deuxième rendu, et permettant de couvrir les cas où l'objet dont on souhaite vérifier la visibilité a été partiellement masqué par un objet semi-transparent, ou est rendu peu visible du fait d'une lumière environnante trop faible ou trop intense, ou du fait de réflexions sur sa surface.

Un aspect de l'invention concerne ainsi un procédé de calcul d'un score de visibilité d'au moins un objet dans une scène en trois dimensions, la scène étant composée d'une pluralité d'objets et affichée dans une zone d'affichage par une caméra principale associée à un pipeline graphique principal, caractérisé en ce qu'il comprend les étapes suivantes mises en œuvre par une caméra dédiée clone de la caméra principale et associée à un pipeline graphique dédié :
- Sélection d'au moins un objet parmi la pluralité d'objets de la scène,
- Pour le au moins un objet sélectionné :
   - Association de l'objet à une image de texture ne comportant qu'une seule couleur prédéterminée et remplaçant l'image de texture de l'objet associée au pipeline graphique principal,
- Rendu, par la caméra dédiée, de la scène pour produire au moins une image dédiée,
- Pour le au moins un objet sélectionné,
   - Lecture, dans l'image dédiée, de la couleur en au moins un point correspondant à l'objet dans la au moins une image dédiée,
   - Comparaison de la couleur lue avec la couleur prédéterminée pour obtenir le score de visibilité associé à l'objet,
les caméras principale et dédiée opérant séquentiellement, de sorte que l'image dédiée est produite avant ou après l'affichage de la scène dans la zone d'affichage

Grâce à l'invention, une deuxième caméra (dite dédiée car utilisée uniquement pour calculer des scores de visibilité), clone de la caméra principale, permet de reproduire en temps réel le contexte de la scène et ainsi, de calculer et communiquer (par exemple à un utilisateur) les scores de visibilité en temps réel. Le terme « en temps réel » signifie en synchronisation avec le rendu de la scène tel qu'affiché à l'utilisateur sur la zone d'affichage. Pour cela, les pipelines graphiques sont mis en œuvre par des moyens techniques : unités de traitement, écran d'affichage.

L'association d'une étape d'assignation, sur l'objet à tester, d'une texture unie de couleur prédéterminée (étape d'association de l'objet sélectionné avec une image de texture comportant qu'une couleur prédéterminée), d'une étape de rendu, et d'une étape de comparaison de couleurs effectuée à partir de l'image rendue, permet de représenter l'aspect visible, partiellement visible ou non visible d'un objet par un score de visibilité, cela de façon précise (i.e. au plus près de ce que voit l'utilisateur) et sans recours à un stencil buffer.

La précision du calcul est obtenue grâce à plusieurs caractéristiques.

Le fait d'échanger la texture, dite réelle car associée au pipeline graphique principal, associée à l'objet sélectionné par une texture unie de couleur prédéterminée permet de fournir un étalon de couleur robuste par rapport à la texture réelle (affichée par la caméra principale) qui comprend généralement des couleurs multiples, ainsi que des variations de teintes et d'éclairage. L'avantage est que même de faibles variations de couleur, dues par exemple à la présence d'objets semi-transparents ou à des changements d'éclairage ou de luminosité dans la scène, peuvent être détectées.

L'étape de rendu effectuée successivement à l'étape d'échange de texture permet de produire (sans l'afficher) une image (dite dédiée) en tout point identique à celle affichée par la caméra principale à l'exception de la texture de l'objet sélectionné, qui a pris la texture unie de couleur prédéterminée. Tous les effets d'ombres, (shaders), éclairage, etc. sont identiques au rendu affiché par la caméra principale. La couleur lue en au moins un point correspondant à l'objet sélectionné dans l'image dédiée porte l'information de ces différentes conditions.

Le fait de mesurer la différence de couleur en un ou plusieurs points de l'image dédiée correspondant à des points positionnés sur l'objet permet d'augmenter le rapport signal sur bruit du score de visibilité final (en moyennant les mesures), ou/et d'obtenir une cartographie de la visibilité de l'objet.

Il convient de noter que le fait que les deux caméras, principale et dédiée, opèrent séquentiellement permet d'effectuer l'étape d'assignation de l'image de texture unie avant le rendu de la caméra dédiée.

Ainsi, le procédé selon l'invention permet de représenter précisément et en temps réel l'état de visibilité de certains objets d'une scène 3D, cela sur un large éventail de configurations et pipelines de rendus. Elle est plus simple à implémenter que la technique de l'art antérieur basée sur le stencil buffer.

Selon un mode de réalisation préférentiel, le score de visibilité est calculé en prenant le score de visibilité le plus faible parmi un premier score de visibilité calculé lors d'une première itération de la caméra dédiée, et un deuxième score de visibilité calculé lors d'une deuxième itération de la caméra dédiée, la première et la deuxième itération étant successives, la couleur prédéterminée choisie pour la deuxième itération étant opposée sur le cercle chromatique à la couleur prédéterminée choisie pour la première itération.

Ce mode de réalisation préférentiel permet d'éviter des faux positifs (i.e., un objet détecté visible alors qu'il ne l'est pas) et donc d'améliorer la précision du procédé.

Ce mode de réalisation préférentiel permet notamment de calculer précisément le score de visibilité même lorsque la scène a une texture de couleur proche de la couleur prédéterminée, ou/et lorsqu'un objet d'une texture de couleur proche de la couleur prédéterminée cache ou recouvre partiellement l'objet dont on souhaite mesurer la visibilité.

Outre les caractéristiques qui viennent d'être évoquées dans le paragraphe précédent, le procédé selon un aspect de l'invention peut présenter une ou plusieurs caractéristiques complémentaires parmi les suivantes, considérées individuellement ou selon toutes les combinaisons techniquement possibles.

La couleur prédéterminée est choisie dans une liste formée d'au moins : rose de composantes rouge, verte, bleue respectivement égales à 255, 0, et 255, et vert de composantes rouge, verte, bleue respectivement égales à 0, 255,0.

Le rose est avantageusement choisi car il s'agit d'une couleur généralement peu présente dans la scène. Ce choix de couleur prédéterminée permet donc de réduire la probabilité de trouver un objet de même couleur que la couleur prédéterminée intercalé entre l'objet sélectionné et la caméra. Comme cette configuration peut conduire à des erreurs de détection de visibilité (la faible différence de couleur alors trouvée à l'issue de l'étape de comparaison indiquant anormalement une visibilité de l'objet sélectionné), le choix du rose est favorable à une mesure plus fiable du score de visibilité.

La lecture, dans l'image dédiée, de la couleur de l'objet sélectionné est effectuée sur une pluralité de points correspondants à l'objet sélectionné dans la au moins une image dédiée, par exemple 16 points, les points de la pluralité de points étant obtenus en découpant l'objet sélectionné en zones à tester, et en prenant les point centraux des zones à tester.

Ainsi, il est possible de déterminer un score de visibilité à différents endroits de l'objet. L'avantage est qu'il est ainsi possible de prendre en compte le fait qu'un objet recouvre partiellement l'objet à tester, ou qu'une partie de l'objet est dans une zone d'ombre.

Selon la taille de l'objet sélectionné (qui dépend aussi de la résolution de l'image dédiée), les points de la pluralité de points peuvent se recouvrir. Dans ce cas, le score de visibilité est calculé plusieurs fois pour un même point, et le score de visibilité final est la moyenne des scores de visibilité calculés.

La comparaison de la couleur lue avec la couleur prédéterminée est obtenue par calcul d'une différence de couleur par :
- calcul, pour chaque composante rouge, verte et bleue, de la différence absolue entre la couleur lue et la couleur prédéterminée, et
- calcul de la moyenne des différences absolues calculées.

La comparaison de la couleur lue avec la couleur prédéterminée est en outre basée sur un calcul de différence de teinte comprenant les étapes suivantes :
- Détermination, à partir des composantes rouge, verte et bleue, de la teinte de la couleur lue et de la teinte de la couleur prédéterminée,
- calcul de la différence entre la teinte lue et la teinte de la couleur prédéterminée,
- pondération du résultat de la différence calculée entre la teinte lue et la teinte de la couleur prédéterminée, pour obtenir la différence de teinte,
- comparaison de la différence de teinte par rapport à une valeur seuil prédéterminée telle que la valeur 0,25 :
- Si la différence de teinte est inférieure ou égale à la valeur seuil, la différence entre la couleur lue et la couleur prédéterminée est égale à la moyenne de la différence de teinte et de la différence de couleur,
- Si la différence de teinte est supérieure à la valeur seuil, la différence entre la couleur lue et la couleur prédéterminée est égale à la différence de couleur.

Ainsi, le procédé est plus résilient aux changements de luminosité de la scène. En effet, la mesure de différence de teinte permet de déterminer si deux couleurs sont similaires, même si leur luminosité est différente (une est claire, l'autre foncée). L'avantage est que le score de visibilité est déterminé de façon précise même dans le cas où l'objet sélectionné a été masqué par un objet semi-transparent, ou/et si la lumière environnante de la scène est trop intense ou trop faible et rend l'objet sélectionné peu visible, ou/et encore si l'objet sélectionné subit une réflexion qui empêche de bien voir sa surface.

La fréquence de production d'images de la caméra dédiée est inférieure à la fréquence de calcul de la caméra principale.

La fréquence de production d'images de la caméra dédiée est inférieure ou égale au quart de la fréquence de production d'images de la caméra principale.

Ainsi, on limite les ressources de calcul nécessaires et on ne détériore pas les performances de l'application qui utilise le moteur de rendu.

La résolution de l'image dédiée est inférieure à la résolution du rendu de la caméra principale.

Comme pour la diminution de la fréquence, le fait de diminuer la résolution de l'image dédiée permet de ne pas détériorer les performances de l'application tout en permettant un suivi (ou « tracking » en anglais) en temps réel de la visibilité.

La plus petite résolution de l'image dédiée correspond à une largeur d'image de 96 pixels.

Cette valeur, bien que faible, a été identifiée comme permettant de donner un score de visibilité alliant précision et efficacité, et n'impactant pas le fonctionnement de l'application.

Le procédé comprend en outre, après l'étape de comparaison de couleurs, une étape supplémentaire, effectuée pour le au moins un objet sélectionné, d'association de l'objet à l'image de texture associée au pipeline graphique principal, dite image de texture réelle, et remplaçant l'image de texture ne comportant que la couleur prédéterminée.

Le procédé comprend en outre une étape de test de la taille de l'objet sélectionné, comprenant la détermination d'une surface occupée par l'objet sélectionné sur l'image dédiée, et d'un rapport de surface entre ladite surface occupée par l'objet et la surface de l'image dédiée, si ce rapport est inférieur à une valeur seuil, par exemple une valeur seuil égale à 1,5%, alors le score de visibilité est égal à 0, l'objet sélectionné étant considéré comme trop petit pour être visible.

Outre les caractéristiques qui viennent d'être évoquées dans les paragraphes précédents, le procédé peut présenter une ou plusieurs caractéristiques complémentaires parmi les suivantes, considérées individuellement ou selon toutes les combinaisons techniquement possibles :
- Le procédé peut en outre comprendre une étape de détermination d'un respect, pour un utilisateur, des conditions de visibilité du au moins un objet, lesdites conditions de visibilité dépendant du score de visibilité du au moins un objet.
- Les conditions de visibilité peuvent alors dépendre en outre de paramètres prédéterminés comprenant une durée minimum de visibilité du au moins un objet et/ou d'un rapport de surface entre une surface occupée par l'objet et la surface de l'image dédiée et/ou d'un angle entre la direction normale à la surface occupée par l'objet et la direction normale de la zone d'affichage.
- Après l'étape de détermination du respect des conditions de visibilité, le procédé peut comprendre une étape comprenant une modification de la scène et/ou un déclenchement d'un évènement additionnel dans ou en marge de la scène.
- Alternativement à l'étape de détermination d'un respect, pour un utilisateur, des conditions de visibilité du au moins un objet, le procédé peut en outre comprendre, lorsque le score de visibilité du au moins un objet est différent d'un score de visibilité prédéterminé, une étape de modification de l'objet et une réitération des étapes du calcul du score de visibilité de l'objet modifié.

L'invention et ses différentes applications seront mieux comprises à la lecture de la description qui suit et à l'examen des figures qui l'accompagnent.

### BREVE DESCRIPTION DES FIGURES

Les figures sont présentées à titre indicatif et nullement limitatif de l'invention.
- [Fig. 1] montre une illustration simplifiée du fonctionnement d'un moteur de rendu graphique,
- [Fig. 2] est un schéma synoptique illustrant l'enchainement des étapes du procédé de calcul selon l'invention,
- [Fig. 3] montre schématiquement un mode de réalisation d'un ordinateur,
- [Fig. 4] montre une illustration simplifiée du fonctionnement du moteur de rendu graphique utilisé pour mettre en œuvre les étapes de la figure 2,
- [Fig. 5] est une illustration d'une scène 3D qui sera rendue, lors de sa prochaine itération, par la caméra principale du moteur de rendu graphique de la figure 4,
- [Fig. 6] est une illustration simplifiée de la scène 3D de la figure 5 obtenue à l'issue de la troisième étape de la figure 2,
- [Fig. 7] est une illustration simplifiée du rendu, par la caméra dédiée du moteur graphique de la figure 4, de la scène 3D de la figure 5,
- [Fig. 8] est une vue agrandie de la figure 7,
- [Fig.9] illustre un mode de réalisation préférentiel du procédé de la figure 2.

### DESCRIPTION DETAILLEE

Sauf précision contraire, un même élément apparaissant sur des figures différentes présente une référence unique.

L'invention concerne un procédé de calcul d'un score de visibilité associé à un objet d'une scène virtuelle 3D, en particulier un procédé de calcul qui allie efficacité, précision et simplicité d'implémentation.

La figure 2 illustre de façon schématique l'enchainement des étapes S205, S210, S220, S230, S240, S250, S260, et S270 du procédé 200 de calcul selon l'invention.

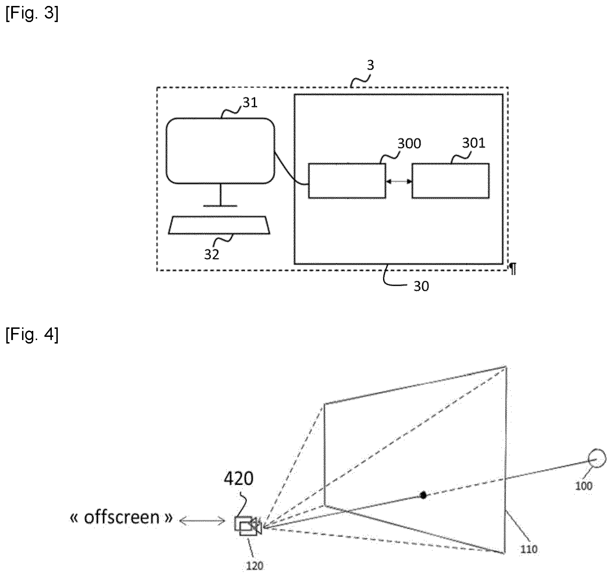

Dans la pratique, et en référence à la figure 3, le procédé 200 est mis en œuvre par un système 3 comprenant un ordinateur 30, une console de jeu, un téléphone intelligent et plus généralement tout dispositif capable de mettre en œuvre un moteur de rendu graphique.

Dans cette description, les actions de traitement sont réalisées par des unités de traitement, c'est-à-dire des microprocesseurs 300 qui utilisent de la mémoire 301. Ces microprocesseurs sont des microprocesseurs généralistes aussi appelés CPU, et/ou des microprocesseurs graphiques aussi appelés GPU.

Le système 3 peut comprendre un écran 31 et/ou un clavier 32.

Les étapes du procédé 200 sont décrites ci-après en référence à la figure 2, la figure 4, la figure 5, la figure 6, la figure 7 et la figure 8.

Le procédé débute avec une étape S205 de déclaration d'une caméra dédiée 420 (cf. figure 4) qui s'ajoute à une caméra principale 120. On utilise des interfaces de programmation du moteur de rendu pour déclarer et instancier cette caméra 420 dédiée.

Dans la suite de la description, le terme « caméra » désigne le point de vue (virtuel) depuis lequel la scène est rendue. L'expression « la caméra est dessinée » désigne le fait de générer (ou rendre), à partir d'une scène 3D, une image 2D depuis le point de vue de la caméra. La caméra est pour cela associée à un pipeline graphique mis en œuvre par les unités de traitement.

Le pipeline graphique consiste en un enchainement de briques algorithmiques visant à pixeliser les objets géométriques de la scène 3D afin d'obtenir l'image 2D.

On désigne enfin par « fréquence de la caméra » le nombre d'images 2D par seconde générées par la caméra, qui correspond aussi au nombre d'itérations par seconde de la caméra.

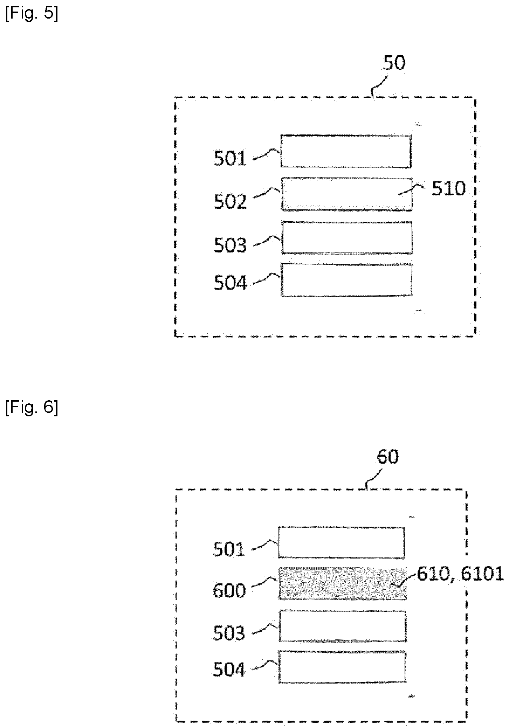

La figure 5 représente schématiquement la scène 3D 50 dessinée et affichée dans une zone d'affichage par la caméra 120 principale et dans laquelle on souhaite vérifier la visibilité d'un ou de plusieurs objets. Cette scène 50 est composée d'une pluralité d'objets 501, 502, 503, 504 3D, chaque objet ayant un identifiant. Les objets sont définis par une liste de formes géométriques et des attributs (texture, etc.).

La caméra 120 principale est associée à un pipeline graphique principal.

La caméra 120 principale génère et affiche à l'intention de l'utilisateur de l'application une série d'images successives sur une zone d'affichage (par exemple occupant tout ou une partie de l'écran 32 illustré figure 3). Le temps entre deux images de la série d'images dépend de la fréquence de la caméra 120 principale. Celle-ci est adaptée à la vision humaine, pour donner la fluidité nécessaire à une vision en temps réel de la scène. Au minimum, la fréquence de production d'images de la caméra 120 principale est de 30 images par seconde. De préférence, la fréquence de la caméra 120 principale est de 60 images par secondes. Elle peut aussi être de 120 images par seconde.

La caméra 420 dédiée est un clone de la caméra principale 120, c'est-à-dire qu'elle suit à tout instant la position et les caractéristiques de cette caméra principale 120 (position, échelle, options de filtre, plans de coupe, etc...). Par exemple, elle reproduit les effets d'ombres, d'éclairage, etc. à l'identique de la caméra principale 120.

La caméra 420 dédiée se distingue de la caméra 120 sur plusieurs aspects.

En premier lieu, la caméra 420 dédiée est associée à un pipeline graphique dédié, modifié par rapport au pipeline graphique principal pour intégrer les algorithmes permettant de mettre en œuvre les étapes S210 à S270 du procédé 200.

En deuxième lieu, la caméra 420 dédiée rend une image dite dédiée, de façon « offscreen » selon la terminologie anglaise. Cela signifie que cette image dédiée n'est pas affichée à l'écran 31. L'image dédiée n'est pas donc pas destinée à l'utilisateur de l'application (au contraire du rendu principal affiché par la caméra 120 principale), mais uniquement au calcul du score de visibilité.

En troisième lieu, la fréquence de production d'images de la caméra 420 dédiée peut être plus faible que la fréquence de la caméra 120 principale.

La fréquence de production d'images de la caméra dédiée peut ainsi être inférieure ou égale au quart de la fréquence de production d'images de la caméra principale.

En quatrième lieu, la résolution de l'image dédiée rendue par la caméra 420 peut être dégradée, c'est-à-dire plus faible que la résolution du rendu principal. La résolution est par exemple définie par la dimension de l'image dédiée. De préférence, la plus petite dimension de l'image dédiée est de 96 pixels, la plus grande dimension étant calculée par rapport aux dimensions de l'écran 31.

Le fait de diminuer la fréquence et la résolution de la caméra 420 dédiée permet de ne pas perturber les performances du moteur graphique.

Il convient enfin de noter que la caméra 420 dédiée et la caméra 120 principale fonctionnent séquentiellement. Dit autrement, une des deux caméras 120,420 est dessinée avant l'autre. Le rendu de l'image dédiée est ainsi déclenché avec un léger décalage temporel, par exemple un décalage temporel de 33 ms, par rapport au rendu et à l'affichage de l'image de la scène dans la fenêtre principale.

Une fois la caméra 420 dédiée déclarée à l'étape S205, les étapes S210, S220, S230, S240, S250 et, de façon optionnelle les étapes S260 et S270, sont successivement effectuées, cela à chaque itération de la caméra 420 dédiée.

L'étape S210 du procédé 200 est effectuée à partir de la scène 3D 50 décrite précédemment en relation avec la figure 5. Cette scène est celle qui va être affichée par la caméra 120 principale lors de sa prochaine itération.

L'étape S210 est une étape de sélection d'un ou plusieurs objet 600 parmi la pluralité d'objet 501, 502, 503, 504 de la scène 3D 50. Dans l'exemple donné, un objet 600 est sélectionné, correspondant à l'objet 502 de la scène 50.

Les objets 600 sélectionnés sont ceux dont on veut mesurer en temps réel la visibilité, via un calcul de score de visibilité.

L'étape S210 de sélection produit, dans la zone mémoire 301 du système 3 mettant en œuvre le procédé 200 selon l'invention, une liste d'identifiants associé à chaque objet 600 sélectionné, cette liste comprenant la géométrie de l'objet et sa texture. La texture de l'objet 600 sélectionné est typiquement une image, dite image de texture. A cette étape, la texture 510 de l'objet 600 est celle qui est affichée à l'utilisateur. On l'appellera « texture réelle 510 », ou « image de texture réelle 510 » de l'objet 600 sélectionné.

L'étape S210 est suivie d'une étape S220 qui consiste à échanger l'image de texture réelle 510 de l'objet sélectionné 600 par une image de texture ne comportant qu'une seule couleur prédéterminée.

Pour cela, lors d'une sous-étape S2201 de l'étape S220, on associe à l'objet sélectionné 600 (ou à chaque objet sélectionné) une image de texture 610 qui ne comporte qu'une seule couleur 6101 prédéterminée. On peut, en outre, lors d'une sous-étape S2202 qui peut avoir lieu avant ou après l'étape d'association S220-S2201, extraire et sauvegarder en mémoire l'image 510 de texture réelle de l'objet 600 sélectionné (ou de chaque objet sélectionné). Le terme « sauvegarder » désigne une sauvegarde par référence de l'image de texture, et non pas une copie, en mémoire, de l'image de texture.

Ainsi, à l'issue de l'étape S220, et en référence à la figure 6, on obtient une scène 60, dite initiale, identique à la scène 50 3D qui sera affichée par la caméra 120 principale à l'exception des objets 600 sélectionnés qui auront pris une texture unie 610, de couleur 6101 prédéterminée. Tous les autres attributs (ou réglages et effets) de ces objets 600 sélectionnés sont conservés par exemple la lumière, les ombrages, les « shaders », etc.

Par texture unie, on entend donc qu'une seule couleur 6101 prédéterminée est utilisée pour un même objet 600.

De préférence la couleur prédéterminée 6101 est une couleur généralement peu présente dans une scène 3D, comme le rose, de composantes rouge égale à 255, de composante verte égale à 0 et de composante bleue égale à 255 (ou RGB(255,0,255)).

Lorsque plusieurs objets sont sélectionnés, la même couleur 6101 prédéterminée ou des couleurs prédéterminées différentes peuvent être utilisées.

L'étape S220 est prolongée d'une étape S230 de génération, par la caméra dédiée, d'une image dédiée de la scène 60 réelle obtenue à l'issue de l'étape S220.

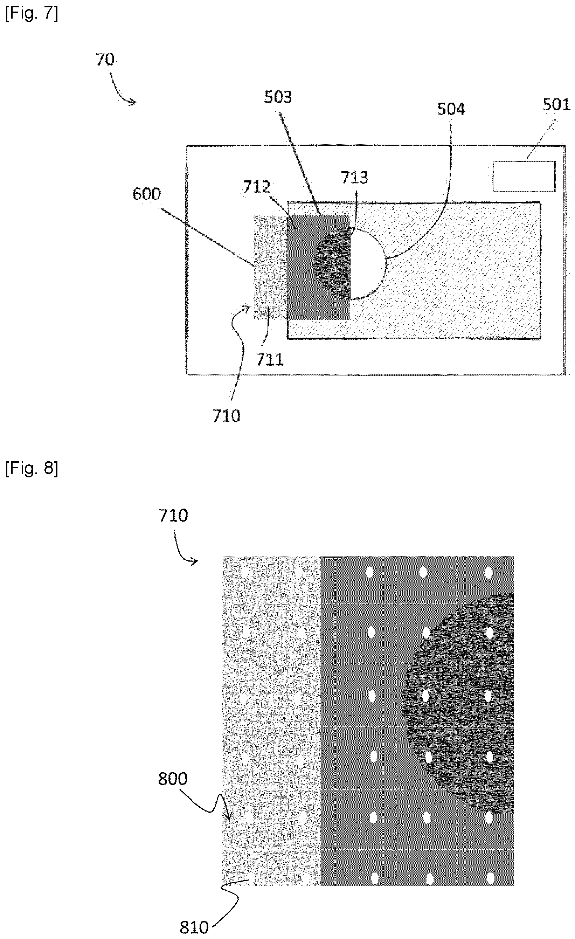

La figure 7 montre un exemple de rendu 70 dédié de la scène 60 réelle comportant les objets 501, 503, et 504 et l'objet sélectionné 600.

L'objet 600 sélectionné est en arrière-plan.

Le premier objet 501 est à distance de l'objet 600 sélectionné et n'a aucune influence sur celui-ci.

Le deuxième objet 503 est dans un plan intermédiaire et recouvre partiellement l'objet 600 sélectionné.

Le troisième objet 504 est au premier plan. En outre, ce troisième objet 504 est transparent, recouvre le deuxième objet 503, et recouvre partiellement l'objet 600 sélectionné.

L'objet 600 sélectionné a pris une nouvelle couleur 710, qui dépend de la scène et de la couleur prédéterminée 610 assignée à l'étape S220 précédente.

La nouvelle couleur 710 résulte en effet d'une modification de la texture unie 610 du fait de la présence d'objets dans des plans compris entre le plan de l'objet sélectionné et la caméra 420, ou du fait de la présence de zones d'ombres recouvrant l'objet 600 sélectionné.

Dans l'exemple de l'image dédiée 70 illustré en figure 7, la couleur 710 :
- n'a pas été modifiée par rapport à la couleur prédéterminée 6101 dans la zone 711 où l'objet 600 sélectionné n'a pas été recouvert,
- a été modifiée par rapport à la couleur prédéterminée 6101 avec une certaine amplitude dans la zone 712 où l'objet 600 sélectionné est recouvert par le troisième objet 504 transparent,
- a été modifié dans la zone 713, avec une amplitude plus grande que dans la zone 712, là où l'objet 600 sélectionné est recouvert du deuxième objet 502.

Ainsi, plus l'objet 600 sélectionné est visible (non recouvert, comme dans la zone 711), plus la différence de couleur entre la couleur 710 dans l'image dédiée et la couleur 6101 prédéterminée est faible.

A l'inverse, moins l'objet 600 sélectionné est visible (recouvert par plusieurs objets, comme dans la zone 713), plus la différence de couleur entre la couleur 710 dans l'image dédiée et la couleur 6101 prédéterminée est grande.

La différence de couleur entre la couleur 710 dans l'image dédiée (70) et la texture de couleur 6101 prédéterminée est donc corrélée à l'état de visibilité ou d'invisibilité de l'objet 600 sélectionné : plus la différence est grande, moins l'objet est visible, et, à l'inverse, plus la différence est petite, plus l'objet est visible.

L'image dédiée 70 est donc un rendu essentiellement identique au rendu principal qui sera généré lors de l'itération suivante de la caméra 120 principale. Une différence est l'objet ou les objets 600 sélectionné(s) qui auront pris une nouvelle couleur 710. Une autre différence peut être, en fonction d'un paramétrage de la mise en œuvre de l'invention, la résolution de l'image 70 dédiée.

En d'autres termes, c'est la même scène qui est rendue sur l'image 70 dédiée et sur l'image affichée par la caméra 120 principale, mais pour certains objets correspondants aux objets 600 sélectionnés, les textures 510 réelles sont changées par des textures 610 unies, de la couleur 6101 prédéterminée, pour le rendu de la caméra 420 dédiée, mais restent utilisées par la caméra 120 principale.

Les étapes S240 et S250 qui suivent l'étape S230 visent à mesurer cette différence de couleur et à la représenter par un score de visibilité.

L'étape S240 est effectuée à partir de l'image dédiée 70. Elle consiste en la lecture de la couleur 710 de l'objet 600.

Cette étape S240 peut être mise en œuvre en ajoutant un « compute shader » dans le pipeline dédié, à la fin du rendu, par la caméra dédiée 420.

En référence à la figure 8, la couleur 710 de l'objet 600 sélectionné est lue en au moins un point 810 appartenant à l'objet 600.

De préférence, la couleur 710 est lue successivement en chaque point d'une pluralité de points appartenant à l'objet, ces points étant déterminés par une étape préalable (non représentée en figure 2) de découpage de l'objet en zones à tester, et de détermination d'un point central dans chaque zone à tester.

Le nombre de points est par exemple 16. Un point correspond à un pixel.

Selon la résolution choisie pour l'image dédiée, des points 810 peuvent se superposer. Dans ce cas, la lecture de couleur est effectuée plusieurs fois en un même point.

C'est par exemple le cas lorsque la résolution de l'image dédiée 70 est minimale (96 pixels pour la dimension la plus petite de l'image dédiée). La taille de l'objet sélectionné sur l'image peut alors n'occuper que quelques pixels.

L'étape S250 prolonge l'étape S240. Elle consiste à comparer la couleur 710 obtenue sur l'image dédiée 70 et la couleur 6101 prédéterminée en chaque point 810 de mesure.

Le résultat de cette comparaison de couleur est avantageusement compris entre 0 (couleur identiques ou très proches) et 1 (couleurs opposées ou très éloignées).

Pour comparer les couleurs, deux techniques de calcul peuvent être effectuées.

La première technique consiste à mesurer une différence de couleur en calculant, pour chaque composante rouge, verte et bleue, la différence absolue entre la couleur 710 lue et la couleur 6101 prédéterminée, puis en moyennant ces différences absolues calculées.

La deuxième technique consiste à associer une comparaison de teinte à la mesure de différence de couleur. La comparaison de teinte permet de détecter qu'une couleur est identique à une autre, même si l'éclairage est différent. Ainsi, la comparaison est plus précise et plus robuste aux changements de luminosité de la scène.

La deuxième technique comprend plus précisément les étapes suivantes :
- Détermination, à partir des composantes rouge, verte et bleue, de la teinte de la couleur 710 lue et de la teinte de la couleur 6101 prédéterminée,
- Calcul de la différence entre la teinte lue et la teinte de la couleur prédéterminée,
- Pondération du résultat de la différence calculée entre la teinte lue et la teinte de la couleur prédéterminée, le résultat de la pondération étant compris entre 0 et 1 et déterminant la différence de teinte.
- Comparaison de la différence de teinte par rapport à une valeur seuil prédéterminée, telle que la valeur 0,25 :
   - Si la différence de teinte est inférieure ou égale à la valeur seuil, la différence entre la couleur lue et la couleur prédéterminée est égale à la moyenne de la différence de teinte et de la différence de couleur,
   - Si la différence de teinte est supérieure à la valeur seuil, la différence entre la couleur lue et la couleur prédéterminée est égale à la différence de couleur.

Le résultat final est une valeur comprise entre 0 (couleurs proches ou identiques) et 1 (couleurs opposées ou éloignées).

On détermine alors un score de visibilité partiel Sₚ à partir du résultat final, ce score de visibilité partiel étant compris entre 0 (zone de test 800 non visible) et 1 (zone de test 800 visible).

On obtient donc un score de visibilité partiel Sₚ pour chaque point 810 de test (i.e. chaque zone 800 de test).

Le score de visibilité S « final » de l'objet 600 sélectionné peut alors être déterminé en calculant la moyenne de tous les scores de visibilité partiels Sₚ obtenus à l'étape S250, ce score final S étant lui aussi compris entre 0 (objet non visible) et 1 (objet visible).

Il convient de noter que les scores de visibilité partiels Sₚ permettent de vérifier la visibilité de l'objet 600 sélectionné dans les cas suivants :
- L'objet 600 a été partiellement masqué par un objet semi-transparent,
- La lumière environnante de la scène est trop intense ou trop faible et rend l'objet peu visible,
- L'objet subit une réflexion qui empêche de bien voir sa surface.

L'état visible/non visible peut être déterminé à partir du score de visibilité S final de l'objet 600 et d'une valeur seuil.

Le score de visibilité S final ou/et les scores de visibilité Sₚ partiels sont alors communiqués, via des moyens de communication (non représentés) à l'utilisateur de l'application ou à d'autres utilisateurs.

Lorsque l'image de texture 510 réelle est sauvegardée lors de l'étape S220, l'étape S250 peut être suivie d'une étape S260 consistant à échanger, dans la scène 60 initiale, l'image de texture 610 unie de la couleur 6101 prédéterminée par l'image de la texture 510 réelle.

Pour cela, on associe à chaque objet 600 sélectionné l'image 510 de texture extraite et sauvegardée lors de l'étape S220.

Comme la caméra 120 principale et la caméra 420 dédiée opèrent séquentiellement, le rendu de la caméra 120 principale a lieu avant ou après celui de la caméra 420 dédiée, donc avant d'avoir remplacé (étape S220) l'image 510 de texture réelle par l'image 610 de texture unie, ou après avoir restauré (étape S260) l'image 510 de texture réelle alors que l'image 610 de texture unie était utilisée pour le rendu 70 de la caméra 420 dédiée.

En d'autres termes, le fait que le rendu des deux caméras principale et dédiée 120, 420 n'est jamais effectué simultanément permet de toujours utiliser l'image 510 de texture réelle pour la caméra 120 principale, et l'image 610 de texture unie pour la caméra 420 dédiée.

Un étape S270 peut aussi être effectuée à la suite de l'étape S260, qui consiste à ajouter un critère de visibilité lié à la taille de l'objet sélectionné 600 dans la scène 50. Cette étape S270 vise à indiquer comme non visible tout objet 600 dont la taille est trop petite par rapport à la taille de la zone d'affichage. Ce peut être parce que l'objet est situé à grande distance de la caméra 120.

Pour cela, l'étape S270 consiste en la détermination d'une surface occupée par l'objet sélectionné 600 sur l'image dédiée 70, et d'un rapport de surface entre la surface occupée par l'objet déterminée précédemment, et la surface de l'image dédiée 70, si ce rapport est inférieur à une valeur seuil, par exemple 1,5%, alors le score de visibilité est égal à 0, l'objet sélectionné étant considéré comme trop petit pour être visible.

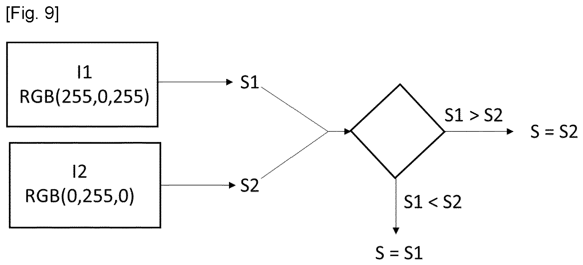

Un mode préférentiel de réalisation du procédé 200 est décrit ci-après en relation avec la figure 9.

Dans ce mode préférentiel, le score S de visibilité est calculé en prenant le score de visibilité le plus faible parmi un premier score S1 de visibilité calculé lors d'une première itération I1 de la caméra dédiée 240, et un deuxième score S2 de visibilité calculé lors d'une deuxième itération I2 de la caméra dédiée 240.

La première et la deuxième itération 11, I2 sont des itérations successives.

La couleur prédéterminée choisie pour la deuxième itération I2 est opposée sur le cercle chromatique à la couleur prédéterminée choisie pour la première itération. Par exemple, si du rose RGB(255,0,255) est choisi pour la première itération 11, alors du vert RGB(0,255,0) sera choisi pour la deuxième itération I2.

Ce mode préférentiel a pour effet de supprimer les faux positifs.

Pour l'expliquer, prenons l'exemple d'une scène essentiellement de couleur rose. Si on utilise une couleur prédéterminée aussi de couleur rose, alors l'objet 600 sélectionné sera anormalement détecté comme visible lors d'une unique itération, même s'il est caché derrière un autre objet de la scène. Les couleurs sont en effet proches.

De même, si l'objet 600 à tester est caché derrière un autre objet de couleur rose, il obtiendra un score S1 de visibilité anormalement élevé avec une première itération I1 utilisant une texture de couleur rose.

En utilisant une deuxième couleur opposée au rose lors de l'itération suivante, par exemple du vert (de composantes rouge, verte, bleue respectivement égale à 0, 255 et 0), l'objet 600 sera détecté avec un score S2 de visibilité beaucoup plus faible, du fait de la différence entre le rose (de la scène ou de l'objet qui cache l'objet à tester) et le vert (de l'objet 600 à tester). En retenant ce second score S2 de visibilité, l'objet est justement détecté comme non ou peu visible, et on évite un faux positif.

A l'inverse, si l'objet à tester est caché par un autre objet de couleur verte, la première itération donnera un score faible qui correspond à la visibilité réelle de l'objet à tester dans la scène.

On notera par ailleurs qu'il n'est pas possible d'obtenir des faux négatifs.

Ainsi, le procédé 200 selon l'invention permet de suivre en temps réel la visibilité d'un objet dans une scène virtuelle 3D, cela via un score de visibilité associé à l'objet alliant précision et efficacité sur un large éventail de configurations et pipeline de rendus, tout en étant plus simple à implémenter que la technique de stencil buffer décrite dans le brevet FR3112638B1.

Le procédé 200, en permettant de suivre en temps réel la visibilité, par un ou plusieurs utilisateurs, d'un objet dans une scène virtuelle 3D, peut être utilisé dans tout domaine d'application utilisant une scène virtuelle 3D, tels que les jeux vidéo, la réalité virtuelle et la réalité augmentée.

Le score de visibilité permet par exemple ainsi d'évaluer si un objet, contenant par exemple une information d'intérêt, a été vu par le ou les utilisateurs. Cet objet d'intérêt peut par exemple permettre l'affichage d'informations d'ordre marketing mais aussi éducatives ou encore liées à des règles de sécurité.

Le procédé 200 peut ainsi comprendre, une étape optionnelle permettant de déterminer si un utilisateur a, au moins partiellement, vu l'objet à partir du score de visibilité calculé pour cet objet. Le verbe « voir » dans l'expression « l'utilisateur a vu ou non l'objet » est ici entendu au sens d'une perception visuelle, i.e. l'utilisateur a réellement perçu l'objet. Autrement dit, le procédé peut comprendre une étape optionnelle de détermination que des conditions de visibilité de cet objet sont respectées (pour un utilisateur), où les conditions de visibilité dépendent du score de visibilité calculé pour l'objet et d'un au moins score de visibilité prédéterminé.

Les conditions de visibilité peuvent en outre dépendre de paramètres prédéterminés comprenant une durée minimum de visibilité du au moins un objet et/ou d'un rapport de surface entre une surface occupée par l'objet et la surface de l'image dédiée et/ou d'un angle entre la direction normale à la surface occupée par l'objet et la direction normale de la zone d'affichage. La durée de visibilité minimum correspond typiquement au temps minimum nécessaire à l'utilisateur pour qu'il perçoive la présence de l'objet dans la scène et qu'il perçoive son contenu informationnel. Par exemple, les conditions de visibilité sont dites respectées lorsque le score de visibilité, par exemple le score de visibilité final S, calculé pour un objet donné est égal à 1 pendant une durée supérieure à 2 s.

Le procédé 200 peut ensuite comprendre, à la détermination que les conditions de visibilité sont respectées ou non, une étape de modification de la scène.

Ainsi, lorsque le score de visibilité d'un objet est inférieur à un premier score de visibilité prédéterminé, une étape finale optionnelle de modification de l'environnement virtuel peut être effectuée. Par exemple, le même objet peut être dupliqué et/ou déplacé dans la scène en trois dimensions tant que le score de visibilité dudit objet est inférieur au premier score de visibilité prédéterminé. Dans ce cas le déplacement peut être effectué à un endroit spécifique de la scène en trois dimensions pour lequel la probabilité que ledit objet soit vu est importante.

De manière complémentaire et/ou alternative, lorsque le score de visibilité d'un objet est supérieur à un second score de visibilité prédéterminé, l'objet peut être supprimé et/ou déplacé dans la scène en trois dimensions. Dans ce cas le déplacement peut être effectué à un endroit spécifique de la scène en trois dimensions pour lequel la probabilité que ledit objet soit affiché est faible. Le procédé permet donc d'optimiser la scène en trois dimensions afin de s'assurer qu'une information d'intérêt a été vue par l'utilisateur.

L'optimisation permet en outre d'économiser des ressources de mémoire et de calcul puisque si un objet a déjà été vu, celui-ci peut par exemple être supprimé et/ou déplacé afin qu'il ne soit plus affiché. De plus, l'affichage de l'objet peut aussi être modifié. En effet, grâce au score de visibilité ainsi calculé, on peut ne pas charger dans, ou décharger de la mémoire la texture associée à un objet qui n'est pas visible.

Dans un premier exemple d'application, le procédé peut permettre d'évaluer l'efficacité d'une formation professionnelle lorsqu'il est utilisé dans le cadre de programmes de formation professionnelle utilisant par exemple la réalité virtuelle et/ou la réalité augmentée. En effet, grâce au score de visibilité, il est possible d'évaluer de manière objective où et comment, c'est-à-dire sur quels objets, les apprenants focalisent leur attention. Cette évaluation peut par exemple permettre d'améliorer les méthodes d'enseignement et/ou d'évaluer les apprenants.

Par exemple, le score de visibilité peut permettre l'analyse d'un comportement d'un apprenant et de comprendre comment différents types d'apprenants, par exemple de niveaux différents, concentrent leur attention sur différents aspects du programme de formation professionnelle.

Dans un second exemple d'application, le procédé peut permettre d'identifier les objets, représentant par exemple des produits à vendre, ayant suscité le plus d'intérêt de la part du ou des utilisateurs. Le procédé peut alors comprendre, lorsqu'il est mis en œuvre sur plusieurs objets de la scène, une étape optionnelle comprenant les opérations suivantes :
- Ordination des scores de visibilité calculés pour chaque objet de la scène, et
- Détermination de l'objet ayant le score de visibilité le plus élevé.

Cette étape optionnelle peut en outre être suivie d'une étape comprenant une modification de la disposition de l'un ou de plusieurs desdits objets en fonction de l'ordonnancement de leur score de visibilité. Ainsi, il est possible, grâce au score de visibilité, d'optimiser, en personnalisant par exemple la disposition et l'apparence d'un ou de plusieurs produits représentés dans la scène virtuelle 3D par un ou des objets. Enfin, il est aussi possible d'effectuer une étude de marché et des tests de produits en analysant le score de visibilité de différents objets placés dans la scène virtuelle 3D.

Dans un troisième exemple d'application, le procédé peut permettre de mesurer l'efficacité d'une ou plusieurs caractéristiques d'un objet afin que cet objet suscite un intérêt de la part d'un ou de plusieurs utilisateurs. Cet objet peut par exemple permettre la publicité d'une information de sécurité ou d'un objet à vendre.

Autrement dit, le score de visibilité peut être utilisé pour tester plusieurs variantes d'un objet. Les scores de visibilité de ces variantes peuvent alors être comparés et la variante ayant le meilleur score de visibilité retenue, selon une méthode de test appelée « A/B testing ». En pratique, le procédé 200 peut ainsi en outre comporter une étape d'utilisation du score de visibilité du au moins un objet, comprenant :
- Lorsque le score de visibilité du au moins un objet est différent d'un score de visibilité prédéterminé, modification de l'objet et réitération du calcul du score de visibilité pour l'objet modifié.

Par modification de l'objet, on entend une modification de l'information d'intérêt associée à l'objet ou de l'affichage de l'objet, ou une modification de son emplacement dans la scène. Cette étape d'utilisation du score de visibilité permet de réattribuer les contenus publicitaires, par exemple à la volée, sur plusieurs emplacements dans la scène afin de maximiser leur visibilité. Elle permet aussi d'utiliser le score de visibilité pour comparer différentes variantes (ou versions) d'un même objet.

Dans un quatrième exemple d'application, le procédé peut permettre le déclenchement d'un évènement additionnel lorsque le score de visibilité est inférieur ou supérieur à un score de visibilité prédéterminé. Cet événement peut par exemple être la création d'un objet ou visuel supplémentaire et/ou d'un retour haptique et/ou d'un son. Cet événement peut par exemple permettre d'attirer l'attention sur l'objet afin que son score de visibilité augmente. Cet événement peut aussi permettre la transmission d'autres informations. Par exemple, l'événement peut consister à afficher des contenus publicitaires additionnels sous la forme d'un contenu publicitaire audio et/ou d'un élément immersif et/ou interactif uniquement lorsque l'utilisateur maintient un angle de vue durant un temps supérieur à un temps prédéterminé.

Dans un cinquième exemple d'application, le procédé peut permettre une optimisation d'une interface utilisateur et d'une expérience utilisateur. Par exemple, le score de visibilité permet d'analyser quelles parties de l'interface utilisateur attirent le plus l'attention des joueurs pour améliorer la conception de l'interface utilisateur et de l'expérience utilisateur. Par exemple, le score de visibilité permet de déterminer quels boutons ou fonctionnalités sont les plus et/ou les moins observés par l'utilisateur.

Dans un sixième exemple d'application, le procédé peut permettre l'adaptation du niveau de difficulté d'un jeu vidéo ou d'un entraînement au niveau de l'utilisateur. Par exemple, il est possible, avec le score de visibilité des éléments clés d'un niveau, de s'assurer que ces éléments clés ne sont ni trop visibles ni trop difficiles à trouver.

Dans un septième exemple d'application, le procédé peut permettre l'amélioration des tutoriels. En effet, le procédé peut permettre de suivre la visibilité des instructions ou des indices donnés pendant les tutoriels pour déterminer si les utilisateurs les remarquent et les comprennent facilement.

Dans un huitième exemple d'application, le procédé peut permettre d'identifier un comportement anormal d'un utilisateur. Par exemple, un utilisateur dont le comportement ne tient pas compte d'un objet dont le score de visibilité est supérieur à un score de visibilité seuil ou à l'inverse un utilisateur qui comme un joueur qui repère des adversaires à travers des murs dans un jeu de tir.

Dans un neuvième exemple d'application, le procédé peut permettre l'l'amélioration du comportement des différents personnages de la scène virtuelle 3D contrôlé par une intelligence artificielle. Par exemple, grâce au score de visibilité, il est possible d'adapter le comportement de l'intelligence artificielle d'un personnage d'intérêt en fonction de la visibilité dudit personnage. Ainsi, cela permet d'obtenir des personnages plus réalistes et plus difficiles à prévoir.

## Revendications

1. Procédé (200) de calcul d'un score (S, Sp) de visibilité d'au moins un objet (600) dans une scène (50) en trois dimensions, la scène (50) étant composée d'une pluralité d'objets (501, 502, 503, 504) et affichée dans une zone d'affichage par une caméra (120) principale associée à un pipeline graphique principal, **caractérisé en ce qu'**il comprend les étapes suivantes mises en œuvre par une caméra dédiée (420) clone de la caméra principale (120) et associée à un pipeline graphique dédié :
- Sélection (S210) d'au moins un objet (600) parmi la pluralité d'objets de la scène,
- Pour le au moins un objet (600) sélectionné :
∘ Association (S220) de l'objet (600) à une image (610) de texture ne comportant qu'une seule couleur (6101) prédéterminée et remplaçant l'image (510) de texture de l'objet associée au pipeline graphique principal,
- Rendu (S230), par la caméra dédiée, de la scène pour produire au moins une image dédiée (70),
- Pour le au moins un objet (600) sélectionné,
∘ Lecture (S240), dans l'image dédiée (70), de la couleur (710) en au moins un point (810) correspondant à l'objet (600) dans la au moins une image dédiée (70),
∘ Comparaison (S250) de la couleur lue (710) avec la couleur prédéterminée (6101) pour obtenir le score de visibilité (S) associé à l'objet (600),
les caméras principale (120) et dédiée (420) opérant séquentiellement, de sorte que l'image dédiée (70) est produite avant ou après l'affichage de la scène dans la zone d'affichage.

2. Procédé (200) selon la revendication 1 **caractérisée en ce que** le score de visibilité (S) est calculé en prenant le score de visibilité le plus faible parmi un premier score (S1) de visibilité calculé lors d'une première itération (11) de la caméra dédiée (420), et un deuxième score (S2) de visibilité calculé lors d'une deuxième itération (12) de la caméra dédiée (420), la première et la deuxième itération (11, I2) étant successives, la couleur prédéterminée choisie pour la deuxième itération (12) étant opposée sur le cercle chromatique à la couleur prédéterminée choisie pour la première itération (11).

3. Procédé (200) selon l'une des revendications 1 à 2 **caractérisé en ce que** la couleur prédéterminée (710) est choisie dans une liste formée d'au moins : rose de composantes rouge, verte, bleue respectivement égales à 255, 0, et 255, et vert de composantes rouge, verte, bleue respectivement égales à 0, 255,0.

4. Procédé (200) selon l'une des revendications 1 à 3 **caractérisé en ce que** la lecture (S240), dans l'image dédiée (70), de la couleur (710) de l'objet sélectionné (600) est effectuée sur une pluralité de points (810) correspondants à l'objet sélectionné (600) dans la au moins une image dédiée, par exemple 16 points, les points de la pluralité de points étant obtenus en découpant l'objet sélectionné (600) en zones (800) à tester, et en prenant les point centraux (810) des zones à tester.

5. Procédé (200) selon l'une des revendications 1 à 4 **caractérisé en ce que** la comparaison de la couleur (710) lue avec la couleur prédéterminée est obtenue par calcul d'une différence de couleur par :
- calcul, pour chaque composante rouge, verte et bleue, de la différence absolue entre la couleur (710) lue et la couleur (6101) prédéterminée, et
- calcul de la moyenne des différences absolues calculées.

6. Procédé (200) selon la revendication 5 **caractérisé en ce que** la comparaison de la couleur (710) lue avec la couleur prédéterminée est en outre basée sur un calcul de différence de teinte comprenant les étapes suivantes :
- Détermination, à partir des composantes rouge, verte et bleue, de la teinte de la couleur (710) lue et de la teinte de la couleur (6101) prédéterminée,
- calcul de la différence entre la teinte lue et la teinte de la couleur prédéterminée,
- pondération du résultat de la différence calculée entre la teinte lue et la teinte de la couleur prédéterminée pour obtenir la différence de teinte,
- comparaison de la différence de teinte par rapport à une valeur seuil prédéterminée telle que la valeur 0,25 :
∘ Si la différence de teinte est inférieure ou égale à la valeur seuil, la différence entre la couleur (710) lue et la couleur (6101) prédéterminée est égale à la moyenne de la différence de teinte et de la différence de couleur,
∘ Si la différence de teinte est supérieure à la valeur seuil, la différence entre la couleur (710) lue et la couleur (6101) prédéterminée est égale à la différence de couleur.

7. Procédé (200) selon l'une des revendications 1 à 6 **caractérisée en ce que** la fréquence de production d'images de la caméra dédiée (420) est inférieure à la fréquence de calcul de la caméra principale (120).

8. Procédé selon la revendication 7 **caractérisé en ce que** la fréquence de production d'images de la caméra dédiée est inférieure ou égale au quart de la fréquence de production d'images de la caméra principale.

9. Procédé (200) selon l'une des revendications 1 à 8 **caractérisé en ce que** la résolution de l'image dédiée est inférieure à la résolution du rendu de la caméra principale (120).

10. Procédé (200) selon la revendication 9 **caractérisé en ce que** la plus petite résolution de l'image dédiée (70) correspond à une largeur d'image de 96 pixels.

11. Procédé (200) selon l'une des revendications 1 à 10 **caractérisé en ce qu'**il comprend en outre une étape (S270) de test de la taille de l'objet (600) sélectionné, comprenant la détermination d'une surface occupée par l'objet (600) sélectionné sur l'image (70) dédiée, et d'un rapport de surface entre ladite surface occupée par l'objet et la surface de l'image dédiée, si ce rapport est inférieur à une valeur seuil, par exemple une valeur seuil égale à 1,5%, alors le score de visibilité est égal à 0, l'objet sélectionné étant considéré comme trop petit pour être visible.

12. Procédé (200) selon l'une des revendications 1 à 11, comprenant en outre une étape de détermination d'un respect, pour un utilisateur, des conditions de visibilité du au moins un objet, lesdites conditions de visibilité dépendant du score de visibilité (S, Sp) du au moins un objet (600).

13. Procédé (200) selon la revendication 12, dans lequel les conditions de visibilité dépendent en outre de paramètres prédéterminés comprenant une durée minimum de visibilité du au moins un objet (600) et/ou d'un rapport de surface entre une surface occupée par l'objet (600) et la surface de l'image dédiée et/ou d'un angle entre la direction normale à la surface occupée par l'objet (600) et la direction normale de la zone d'affichage.

14. Procédé (200) selon l'une des revendications 12 ou 13, comprenant, après l'étape de détermination du respect des conditions de visibilité, une étape comprenant une modification de la scène (50) et/ou un déclenchement d'un évènement additionnel dans ou en marge de la scène (50).

15. Procédé (200) selon l'une des revendications 1 à 11, comprenant en outre, lorsque le score de visibilité (S, Sp) du au moins un objet (600) est différent d'un score de visibilité prédéterminé, une étape de modification de l'objet (600) et une réitération des étapes du calcul du score de visibilité de l'objet modifié.

## Patentansprüche

1. Verfahren (200) zur Berechnung eines Sichtbarkeitswerts (S, Sp) mindestens eines Objekts (600) in einer dreidimensionalen Szene (50), wobei die Szene (50) aus einer Vielzahl von Objekten (501, 502, 503, 504) besteht und in einem Anzeigebereich durch eine Hauptkamera (120) angezeigt wird, die einer Hauptgrafikpipeline zugeordnet ist, **dadurch gekennzeichnet, dass** es die folgenden Schritte umfasst, die von einer dedizierten Kamera (420) ausgeführt werden, die ein Klon der Hauptkamera (120) ist und einer dedizierten Grafikpipeline zugeordnet ist:
- Auswahl (S210) mindestens eines Objekts (600) aus der Vielzahl von Objekten der Szene,
- Für das mindestens eine ausgewählte Objekt (600):
∘ Zuordnung (S220) des Objekts (600) zu einem Texturbild (610), das nur eine einzige vorbestimmte Farbe (6101) aufweist und das der Hauptgrafikpipeline zugeordnete Texturbild (510) des Objekts ersetzt,
- Rendern (S230) der Szene durch die dedizierte Kamera, um mindestens ein dediziertes Bild (70) zu erzeugen,
- Für das mindestens eine ausgewählte Objekt (600),
∘ Auslesen (S240) der Farbe (710) an mindestens einem Punkt (810), der dem Objekt (600) im mindestens einen dedizierten Bild (70) entspricht,
∘ Vergleich (S250) der ausgelesenen Farbe (710) mit der vorgegebenen Farbe (6101), um den dem Objekt (600) zugeordneten Sichtbarkeitswert (S) zu erhalten,
wobei die Hauptkamera (120) und die dedizierte Kamera (420) nacheinander arbeiten, sodass das dedizierte Bild (70) vor oder nach der Anzeige der Szene im Anzeigebereich erzeugt wird.

2. Verfahren (200) nach Anspruch 1, **dadurch gekennzeichnet, dass** der Sichtbarkeitswert (S) berechnet wird, indem der niedrigste Wert aus einem ersten Sichtbarkeitswert (S1), der bei einer ersten Iteration (I1) der dedizierten Kamera (420) berechnet wurde, und einem zweiten Sichtbarkeitswert (S2), der bei einer zweiten Iteration (I2) der dedizierten Kamera (420) berechnet wurde, genommen wird, wobei die erste und die zweite Iteration (I1, I2) aufeinanderfolgen und die für die zweite Iteration (I2) gewählte vorbestimmte Farbe auf dem Farbkreis der für die erste Iteration (I1) gewählten vorbestimmten Farbe gegenüberliegt.

3. Verfahren (200) nach einem der Ansprüche 1 bis 2, **dadurch gekennzeichnet, dass** die vorbestimmte Farbe (710) aus einer Liste ausgewählt wird, die mindestens Folgendes umfasst: Rosa mit den Komponenten Rot, Grün und Blau, die jeweils 255, 0 und 255 betragen, und Grün mit den Komponenten Rot, Grün und Blau, die jeweils 0, 255 und 0 betragen.

4. Verfahren (200) gemäß einem der Ansprüche 1 bis 3, **dadurch gekennzeichnet, dass** das Auslesen (S240) in dem dedizierten Bild (70) der Farbe (710) des ausgewählten Objekts (600) an einer Vielzahl von Punkten (810) erfolgt, die dem ausgewählten Objekt (600) in dem mindestens einen dedizierten Bild entsprechen, beispielsweise 16 Punkten, wobei die Punkte der Vielzahl von Punkten erhalten werden, indem das ausgewählte Objekt (600) in zu prüfende Bereiche (800) unterteilt wird und die Mittelpunkte (810) der zu prüfenden Bereiche genommen werden.

5. Verfahren (200) nach einem der Ansprüche 1 bis 4, **dadurch gekennzeichnet, dass** der Vergleich der erfassten Farbe (710) mit der vorgegebenen Farbe durch Berechnung einer Farbdifferenz erfolgt, und zwar durch:
- Berechnung der absoluten Differenz zwischen der erfassten Farbe (710) und der vorgegebenen Farbe (6101) für jede Rot-, Grün- und Blaukomponente und
- Berechnung des Mittelwerts der berechneten absoluten Differenzen.

6. Verfahren (200) nach Anspruch 5, **dadurch gekennzeichnet, dass** der Vergleich der erfassten Farbe (710) mit der vorgegebenen Farbe ferner auf einer Berechnung der Farbtondifferenz basiert, die die folgenden Schritte umfasst:
- Bestimmung des Farbtons der erfassten Farbe (710) und des Farbtons der vorgegebenen Farbe (6101) anhand der Rot-, Grün- und Blaukomponenten,
- Berechnung der Differenz zwischen dem erfassten Farbton und dem Farbton der vorgegebenen Farbe,
- Gewichtung des Ergebnisses der berechneten Differenz zwischen dem erfassten Farbton und dem Farbton der vorgegebenen Farbe, um die Farbtondifferenz zu erhalten,
- Vergleich der Farbtondifferenz mit einem vorgegebenen Schwellenwert, beispielsweise dem Wert 0,25:
∘ Wenn die Farbtondifferenz kleiner oder gleich dem Schwellenwert ist, entspricht die Differenz zwischen der erfassten Farbe (710) und der vorgegebenen Farbe (6101) dem Mittelwert aus der Farbtondifferenz und der Farbdifferenz,
∘ Wenn die Farbtondifferenz größer als der Schwellenwert ist, entspricht die Differenz zwischen der erfassten Farbe (710) und der vorgegebenen Farbe (6101) der Farbdifferenz.

7. Verfahren (200) nach einem der Ansprüche 1 bis 6, **dadurch gekennzeichnet, dass** die Bildwiederholfrequenz der dedizierten Kamera (420) geringer ist als die Rechenfrequenz der Hauptkamera (120).

8. Verfahren nach Anspruch 7, **dadurch gekennzeichnet, dass** die Bildwiederholfrequenz der dedizierten Kamera kleiner oder gleich einem Viertel der Bildwiederholfrequenz der Hauptkamera ist.

9. Verfahren (200) nach einem der Ansprüche 1 bis 8, **dadurch gekennzeichnet, dass** die Auflösung des dedizierten Bildes geringer ist als die Auflösung des Renderings der Hauptkamera (120).

10. Verfahren (200) nach Anspruch 9, **dadurch gekennzeichnet, dass** die kleinste Auflösung des dedizierten Bildes (70) einer Bildbreite von 96 Pixeln entspricht.

11. Verfahren (200) nach einem der Ansprüche 1 bis 10, **dadurch gekennzeichnet, dass** es ferner einen Schritt (S270) zum Prüfen der Größe des ausgewählten Objekts (600) umfasst, der die Bestimmung einer vom ausgewählten Objekt (600) auf dem dedizierten Bild (70) eingenommenen Fläche sowie eines Flächenverhältnisses zwischen der vom Objekt eingenommenen Fläche und der Fläche des dedizierten Bildes umfasst; wenn dieses Verhältnis kleiner als ein Schwellenwert ist, beispielsweise ein Schwellenwert von 1,5 %, dann ist der Sichtbarkeitswert gleich 0, wobei das ausgewählte Objekt als zu klein angesehen wird, um sichtbar zu sein.

12. Verfahren (200) nach einem der Ansprüche 1 bis 11, das ferner einen Schritt zum Bestimmen der Erfüllung der Sichtbarkeitsbedingungen des mindestens einen Objekts für einen Benutzer umfasst, wobei die Sichtbarkeitsbedingungen vom Sichtbarkeitswert (S, Sp) des mindestens einen Objekts (600) abhängen.

13. Verfahren (200) nach Anspruch 12, bei dem die Sichtbarkeitsbedingungen ferner von vorgegebenen Parametern abhängen, die eine Mindestsichtbarkeitsdauer des mindestens einen Objekts (600) und/oder eines Flächenverhältnisses zwischen einer vom Objekt (600) eingenommenen Fläche und der Fläche des dedizierten Bildes und/oder eines Winkels zwischen der Normalen zur vom Objekt (600) eingenommenen Fläche und der Normalen des Anzeigebereichs umfasst.

14. Verfahren (200) nach einem der Ansprüche 12 oder 13, das nach dem Schritt zum Bestimmen der Erfüllung der Sichtbarkeitsbedingungen einen Schritt umfasst, der eine Änderung der Szene (50) und/oder die Auslösung eines zusätzlichen Ereignisses innerhalb oder am Rande der Szene (50) beinhaltet.

15. Verfahren (200) nach einem der Ansprüche 1 bis 11, das ferner, wenn der Sichtbarkeitswert (S, Sp) des mindestens einen Objekts (600) von einem vorgegebenen Sichtbarkeitswert abweicht, einen Schritt zur Änderung des Objekts (600) und eine Wiederholung der Schritte zur Berechnung des Sichtbarkeitswerts des geänderten Objekts umfasst.

## Claims

1. A method (200) for computing a visibility score (S, Sp) of at least one object (600) in a three-dimensional scene (50), the scene (50) being comprised of a plurality of objects (501, 502, 503, 504) and displayed in a display zone by a main camera (120) associated with a main render pipeline, **characterised in that** it comprises the following steps implemented by a dedicated camera (420) which is a clone of the main camera (120) and associated with a dedicated render pipeline:
- selecting (S210) at least one object (600) from the plurality of objects of the scene,
- for the at least one object (600) selected:
∘ associating (S220) the object (600) with a texture image (610) including only one predetermined colour (6101) and replacing the texture image (510) of the object associated with the main render pipeline,
- rendering (S230), by the dedicated camera, the scene to produce at least one dedicated image (70),
- for the at least one object (600) selected,
∘ reading (S240), in the dedicated image (70), the colour (710) at at least one point (810) corresponding to the object (600) in the at least one dedicated image (70),
∘ comparing (S250) the colour (710) read with the predetermined colour (6101) to obtain the visibility score (S) associated with the object (600),
the main (120) and dedicated (420) cameras operating sequentially, so that the dedicated image (70) is produced before or after the scene is displayed in the display zone.

2. The method (200) according to claim 1 **characterised in that** the visibility score (S) is computed by taking the lowest visibility score from a first visibility score (S1) computed during a first iteration (I1) of the dedicated camera (420), and a second visibility score (S2) computed during a second iteration (I2) of the dedicated camera (420), the first and second iterations (I1, I2) being successive, the predetermined colour chosen for the second iteration (I2) being opposite to the predetermined colour chosen for the first iteration (I1) on the hue circle.

3. The method (200) according to one of claims 1 to 2, **characterised in that** the predetermined colour (710) is chosen from a list formed by at least: pink with red, green and blue components respectively equal to 255, 0 and 255, and green with red, green and blue components respectively equal to 0, 255 and 0.

4. The method (200) according to one of claims 1 to 3, **characterised in that** reading (S240), in the dedicated image (70), the colour (710) of the object (600) selected is performed on a plurality of points (810) corresponding to the object (600) selected in the at least one dedicated image, for example 16 points, the plurality of points being obtained by cutting the object (600) selected into zones (800) to be tested, and taking the central points (810) of the zones to be tested.

5. The method (200) according to one of claims 1 to 4, **characterised in that** comparing the colour (710) read with the predetermined colour is obtained by computing a colour difference by:
- computing, for each red, green and blue component, the absolute difference between the colour (710) read and the predetermined colour (6101), and
- computing the average of the absolute differences computed.

6. The method (200) according to claim 5, **characterised in that** the comparison of the colour (710) read with the predetermined colour is further based on a hue difference computation comprising the following steps of:
- determining, from the red, green and blue components, the hue of the colour (710) read and the hue of the predetermined colour (6101),
- computing the difference between the hue read and the hue of the predetermined colour,
- weighting the result of the computed difference between the hue read and the hue of the predetermined colour to obtain the hue difference,
- comparing the hue difference with a predetermined threshold value such as the value 0.25:
∘ if the hue difference is less than or equal to the threshold value, the difference between the colour (710) read and the predetermined colour (6101) is equal to the average of the hue difference and the colour difference,
∘ if the hue difference is greater than the threshold value, the difference between the colour (710) read and the predetermined colour (6101) is equal to the colour difference.

7. The method (200) according to one of claims 1 to 6, **characterised in that** the image production frequency of the dedicated camera (420) is lower than the computation frequency of the main camera (120).

8. The method according to claim 7, **characterised in that** the image production frequency of the dedicated camera is less than or equal to a quarter of the image production frequency of the main camera.

9. The method (200) according to one of claims 1 to 8, **characterised in that** the resolution of the dedicated image is less than the render resolution of the main camera (120).

10. The method (200) according to claim 9, **characterised in that** the smallest resolution of the dedicated image (70) corresponds to an image width of 96 pixels.

11. The method (200) according to one of claims 1 to 10, **characterised in that** it further comprises a step (S270) of testing the size of the object (600) selected, comprising determining a surface area occupied by the object (600) selected on the dedicated image (70), and a surface area ratio between said surface area occupied by the object and the surface area of the dedicated image, if this ratio is less than a threshold value, for example a threshold value equal to 1.5%, then the visibility score is equal to 0, the object selected being considered too small to be visible.

12. The method (200) according to one of claims 1 to 11, further comprising a step of determining compliance, for a user, with visibility conditions of the at least one object, said visibility conditions depending on the visibility score (S, Sp) of the at least one object (600).

13. The method (200) according to claim 12, wherein the visibility conditions further depend on predetermined parameters comprising a minimum duration of visibility of the at least one object (600) and/or a surface area ratio between a surface area occupied by the object (600) and the surface area of the dedicated image and/or an angle between the direction normal to the surface area occupied by the object (600) and the normal direction of the display zone.

14. The method (200) according to one of claims 12 or 13, comprising, after the step of determining compliance with the visibility conditions, a step comprising modifying the scene (50) and/or a triggering an additional event inside or outside the scene (50).

15. The method (200) according to one of claims 1 to 11, further comprising, when the visibility score (S, Sp) of the at least one object (600) is different from a predetermined visibility score, a step of modifying the object (600) and reiterating the steps of computing the visibility score of the object modified.
